# EUROPEAN PATENT SPECIFICATION

(11) **EP 4 039 102 B1**
(45) Date of publication and mention of the grant of the patent: **13.12.2023**
(21) Application number: 21214146.9
(22) Date of filing: 13.12.2021
(51) Int. Cl.: A23L 3/36, A23B 7/04, A23L 19/00

(54) **PROCESS FOR FREEZING KINDS OF FRESH COCONUT FRUITS**
VERFAHREN ZUM EINFRIEREN VON FRISCHEN KOKOSFRÜCHTEN
PROCÉDÉ DE CONGÉLATION DE SORTES DE NOIX DE COCO FRAÎCHES

(30) Priority: 08.02.2021 VN 202100723
(43) Date of publication of application: 10.08.2022
(73) Proprietor: Shadid, Naim, Sanyo Domingo Comity (DM)
(72) Inventor: Shadid, Naim, Sanyo Domingo Comity (DM)
(74) Representative: Spengler, Robert

(56) References cited:
- WO-A1-2018/164689
- JAMES CHRISTIAN ET AL: "A Review of Novel and Innovative Food Freezing Technologies", FOOD AND BIOPROCESS TECHNOLOGY ; AN INTERNATIONAL JOURNAL, SPRINGER-VERLAG, NEW YORK, vol. 8, no. 8, 4 June 2015 (2015-06-04), pages 1616-1634, XP035507608, ISSN: 1935-5130, DOI: 10.1007/S11947-015-1542-8 [retrieved on 2015-06-04]

## Description

### Technical field of the invention

The present invention relates to the post-harvest processing of agricultural products. In particular, the present invention relates to a process for freezing kinds of fresh coconut fruits without use of any chemicals of preservatives, but the coconut fruits may be stored up to 24 months, with the quality of coconut fruits is ensured the same as the freshly harvested coconut fruits.

### Prior Art

Coconut is a popular fruit tree grown throughout tropical areas such as Rajasthan, Maharashtra, India, Philippines etc. In these regions, coconut trees are ubiquitous from the coast to the desert and brings a plurality of benefits to local residents. Especially, in the Philippines, the coconut tree is commonly called the "tree of life".

Vietnam is also in the tropical climate zone and has a long coastline, therefore the coconut tree is distributed from Northern to Southern, especially in the western provinces of Vietnam such as Can Tho. Especially, Ben Tre province has the largest coconut growing area in the Vietnam and is known as the "coconut land". The coconut tree has been become a cultural icon in the Ben Tre because it brings a plurality of benefits to the people.

Utility of the different parts of coconut fruits comprises:
White copra is edible and used in the fresh or dried form in some dishes. Dried copra is a material for production of coconut oil.

Coconut juice contain substances, such as sugars, proteins, antioxidants, vitamines and minerals, which supplies and creates a good isotonic electrolyte balance as well as which is a nutritious food source. Coconut juice is used as a beverage in the tropical regions. Coconut juice may be used as a infusion solution. Coconut juice is also used for production of *nata de coco* dessert.

Coconut cream, which is also known as the coconut milk (contains about 17% of fat) is prepared from the shredded copra, which is mixed with hot water or hot milk. Coconut cream is a main ingredient of dishes in the Southeast Asia region and Vietnam. Copra residues from production of coconut milk are used as a animal feed.

Coconut candy is a popular sweet in the Vietnam, its main ingredient is concentrated coconut cream mixed with Pineapple, Durian or Chocolate flavors.

Coconut jam is prepared from shredded copra and impregnated with sugar, and then dried and used in tet holidays of Vietnam.

Endocarp of coconut fruits are used as water ladle and materials for making handicrafts.

Coirs of coconut fruits are used as beckets, ropes, carpets, brushes, boat mosaic as well as compaction materials; it is also widely used in the horticulture as a filler in fertilizers.

Exocarps and coirs of coconut fruits can be used as fuel sources or for production of charcoal, active coal because they are very rich in carbon.

Especially, it is known that coconut fruits provide a source of natural mineral water which is extremely good for health.

Five health benefits of the coconut fruits are indicated below:
i) Providing water, reducing the risk of dehydration
   Coconut juice is known as the natural mineral water, which is a great drink in the days of summer. Coconut juice contains a lots of natural minerals, especially potassium, which has the effect of regulating internal fluid and replenishing water for the body, and especially coconut juice is very good for the kidneys, and it cleans the urinary tract, and prevents nephrolithiasis.
ii) Providing the energy, enhancing the immune system
   Coconut juice contains a plurality of essential minerals, such as iron, potassium, calcium, magnesium, phosphorus, sodium, lauric acid, a low amount of fat, but a high amount of vitamins... therefore, it helps to balance the health of the muscle, the cardiovascular, the nervous system and the immune system. Furthermore, coconut juice contains a relative low amount of sugar compared to other bottled water, it helps to optimally replenish and enhance the energy for the body.
iii) Anti-bacterial, anti-inflammatory, good for the cardiovascular
   Coconut juice contains following components: monolaurin, anti-virus, anti-bacterial and antiprozoal monoglyceride, which has the extremely good anti-bacterial, anti-inflammatory, anti-oxidant effects. It also aids in the treatment and balance of blood pressure due to high amounts of potassium and lauric acid. Furthermore, it also helps to increase HDL (good) cholesterol in order to maintain the cardiovascular health.
iv) Good for the digestive system
   Coconut juice contains a high amount of lauric acid, when introducding into the body, it will be converted to monolaurin-a substance has a anti-virus, anti-bacterial effect and prevents intestinal diseases, parasites and infection in the gastrointestinal tract. Coconut juice is very beneficial for the intestinal tract and the stomach, and it can treat dysentery, constipation, indigestion, worms in the intestinal tract, cholera, etc.
v) Beautifying skin, and reducing weight
   It is known that coconut juice is one of the skin-beautifying panaceas. Coconut juice provides adequate water for the body, helps to keep adequate moisture for skin, and avoids dry skin. Moreover, laurin acid in coconut juice also has the effects of preventing skin aging, balancing pH and keeping balance, linking skin tissues, keeping skin healthy. Furthermore, this is a very good drink for people with obesity, because coconut juice is a natural electrolyte, which helps to reduce the thirst and enhances the metabolism of the body.

With such good effects for the health, the need to preserve the whole coconut fruits with the assurance of quality for as long as possible and to distribute the whole coconut fruits to all consumers including the export is very urgent. This also facilitates the economic development of people in the coconut growing regions.

The coconut fruits themself that having whole shell can be maintained for 2 to 3 weeks. Due to the high harvesting yield, it is still not enough time to completely consume harvested coconut quantities although only harvesting one crop each year . Therefore, there is a need for preservation measures to extend the circulation and distribution time of coconut fruits.

Some solutions for preserving fresh coconut fruits are known, typically the method for injecting preservatives directly into coconut fruits. However, the disadvantages of this solution is that it changesthe quality of coconut fruits (the presence of chemicals in coconut juice), so it is difficult to be accepted by consumers.

Recently, the Research Institute for Oil and Oil Plants, Vietnam investigated and found that sodium metabisulfite-a chemical that is allowed to use in the food processing-can be used for treating the outer surface of endocarp of coconut fruits (the exocarps of coconut fruits were peeled off). The research shows that with an appropriate dose of use and a appropriate treating time, sodium metabisulfite exists only in the outside of exocarps of coconut fruits, which has a whitening effect and a ability to kill microorganisms in the outside of endocarp of coconut fruits. Because this chemical does not permeate into the contents of coconut fruits, the substance of copra and coconut juice can be kept. After the surface of coconut fruits was treated by sodium metabisulfite, the coconut fruits will be wrapped by a film (which is specifically used to preserve fruits) and stored at about 5°C. With this treatment, the freshness of coconut fruits will be kept (the outside colour of coconut fruits is still white, and not browned) for 4-6 weeks.

Another typical solution is a method for flash freezing coconut fruits, wherein coconut fruits are quickly frozen to a temperature in a range from -35°C to -40°C, and then stored at -18°C. This solution meets the requirements for storage of fresh coconut fruits for exporting. However, the disadvantages of this solution is that it is a high cost and the coconut fruits are no longer fresh but already-frozen products. In addition, due to the suddenly deep freezing, cellular tissue structures of coconut fruits are broken, the quality of coconut fruits, such as taste, colour, nutritional ingredients, is reduced. The frozen coconut juice within the endocarp of coconut fruits is expanded, which results in the endocarp of coconut fruits is sometimes broken, and the quality is not ensured. The shelf life of coconut fruits treated by this method is not long, only 8 to 12 weeks, i.e 2 to 3 months, with the significantly reduced quality.

In order to overcome the crack of the endocarp of the coconut fruits, Vietnamese Patent No. VN1-0000056 of the inventors Tran Due Ba and Nguyen Van Khang provides a solution wherein coconut juice in the coconut fruits is sucked out with an amount about 10-15% volume, and then quickly frozen at a temperature in a range from -35°C to - 40°C, and then stored at -18°C. By this solution, the fresh coconut fruits can be stored up to 6 months.

WO2018/164689A1 of Torin KLINE et al relates to a system and method for preparing frozen coconut fruits comprising drying dehusked coconut, partially freezing the dried dehusked coconut, vacuum sealing and flash freezing in a flash freezing unit, which has a temperature in a range from -65°C to -72°C. This system and method can store the fresh coconut fruits over 1 year. However, in order to achieve such deep freezing temperature, the costly freezing systems are required.

However, in order to deliver the fresh coconut fruits to the consumers all arround the world, the shelf life which is achieved by the above solutions, is still not enough. The increase of shelf life of the fresh coconut fruits will facilitate the enhancement of the economic value of coconut fruits, which are agricultural products available in the Vietnam.

### Summary of the invention

The object of the present invention is to overcome the above mentioned disadvantages.

To achieve the object, the present invention provides a process for freezing kinds of fresh coconut fruits without use of any chemicals of preservatives, wherein the coconut fruits can be stored up to 24 months with the same quality as the freshly harvested coconut fruits.

Accordingly, the inventor conducted a plurality of experiments for freezing the fresh coconut fruits with the different time periods, and found the suitable descending temperature ranges and the respective time periods for storage of the coconut fruits, thereby it does not only make the coconut fruits are not broken, and coconut juice is not leaked as when they are rapidly frozen but also keep the freshness, coconut juice is more sweet and more fragrant. Especially, the shelf life of the coconut fruits is extended to 24 months without use of any chemicals or preservatives. This is an unexpected result compared to the known solutions.

This is because in the process for freezing as described above, the water molecules in the coconut fruits are frozen, but the cell tissue structures are not disrupted, the oxidation is inhibited, the bacterial infection is prevented. Thereby, taste and colour of the coconut fruits are unchanged as well as the content of nutrients are maintained up to 99.7%.

In particular, the process for freezing kinds of fresh coconut fruits according to the present invention comprises the following steps:
i) Selecting coconut fruits
   Selecting the coconut trees of 15 years old or more, preferably the Siamese blue coconut trees, preferably which fruit in about 8 months. Preferably the coconut fruits are harvested when they are 33-35 day old because of this age, the sweetness of coconut juice satisfies the required standards, i.e the sweetness of coconut juice is 75°Brix or more. This is the different feature compared to the known solutions, wherein the coconut fruits are usually harvested when they are only 20-25 day old.
ii) Cleaning the coconut fruits
   After harvesting, cutting the coconut fruits and removing outermost blue exocarps, and then peeling off coirs of the coconut fruits until endocarps of the coconut fruits are explored. This step is performed by hands or a machine for peeling off exocarps of the coconut fruits as long as the natural shape of the coconut fruits is maintained and the outer skins are not weaken or the endocarps of the coconut fruits are not damaged. Most preferably the removal of the exocarp is completely performed by hands.

Next, washing and cleaning 3 eyes of the husked coconut fruits, until the openings of the husked coconut fruits are explored, but the openings of the husked coconut fruits are not broken.

Rapidly washing the husked coconut fruits by water, picking up them immediately, and then draining, and not impregnating with water for a long time.

### iii) Drying the surface of the husked coconut fruits

After washing with water, drying the surface of the husked coconut fruits according to a way, which is similar to the nature way, i.e placing the husked coconut fruits on the drying inox shelves in the room, and then using industrial fans for blowing from a plurality of directions of the drying shelves for drying until the of surface of endocarps of the husked coconut fruits is changed to peach brown là 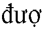 c.

Measuring moisture content on the surface of endocarps of the husked coconut fruits so that it does not exceed 5-10%.

### iv) Freezing the husked coconut fruits

This is the most important step of the process for freezing kinds of fresh coconut fruits according to the present invention.

After drying, the husked coconut fruits are transferred into a freezing room for freezing. The freezing room for freezing the husked coconut fruits is a type of room that can freeze the temperature to -18°C or less and has a system for adjusting temperature and time. The husked coconut fruits are transferred into the freezing room, neatly arranged on the shelves, and then the step of freezing is performed according to 7 following phases:
Freezing phase 1: reducing temperature of the husked coconut fruits to a temperature in a range from +5°C to 0°C and maintaining this temperature for 66-78 hours, preferably about 72 hours, i.e 3 days.
Freezing phase 2: further reducing temperature of the husked coconut fruits to a temperature in a range from 0°C to -5°C and maintaining this temperature for 66-78 hours, preferably about 72 hours, i.e 3 days.
Freezing phase 3: further reducing temperature of the husked coconut fruits to a temperature in a range from -5°C to -10°C and maintaining this temperature for 66-78 hours, preferably about 72 hours, i.e 3 days.
Freezing phase 4: further reducing temperature of the husked coconut fruits to a temperature in a range from -10°C to -12°C and maintaining this temperature for 30-42 hours, preferably about 36 hours, i.e 1.5 days.
Freezing phase 5: further reducing temperature of the husked coconut fruits to a temperature in a range from -12°C to -14°C and maintaining this temperature for 30-42 hours, preferably about 36 hours, i.e 1.5 days.
Freezing phase 6: further reducing temperature of the husked coconut fruits to a temperature in a range from -14°C to -16°C and maintaining this temperature for 30-42 hours, preferably about 36 hours, i.e 1.5 days.
Freezing phase 7: further reducing temperature of the husked coconut fruits to a temperature in a range from -16°C to -18°C and maintaining this temperature for 42-54 hours, preferably about 48 hours, i.e 2 days.

Therefore, total time for freezing the husked coconut fruits in a range from 330 hours to 414 hours, preferably about 372 hours, i.e 15.5 days.

### v) Packing the husked coconut fruits

After freezing, classifying the husked coconut fruits, which have the temperature in a range from -16°C to -18°C according to their size and weight, and then packing them into carton boxs. Next, wrapping the carton boxs by a shrink film using the system for cutting and gluing a shrink film, and then returning them into the freezing room in order to maintain their temperature at -18°C. This temperature will be maintained until use.

### Description of the invention

Hereinafter, in order to describe the present invention more specifically, an exemplary embodiments of the present invention will be described in more details. However, it should be understood that these embodiments are only intended to illustrate the present invention and are not intended to limit the scope of the present invention. In particular, the process for freezing kinds of fresh coconut fruits according to the present invention comprises the following steps:
i) Selecting coconut fruits
   Selecting the coconut trees of 15 years old or more, preferably the Siamese blue coconut trees, preferably which fruit in about 8 months. Preferably the coconut fruits are harvested when they are 33-35 day old because at this age, the sweetness of coconut juice satisfies the required standards, i.e the sweetness of coconut juice is 75°Brix or more.
ii) Cleaning the coconut fruits
   After harvesting, cutting the coconut fruits and removing outermost blue exocarps, and then peeling off coirs of the coconut fruits until endocarps of the coconut fruits are explored. This step is performed by hands or a machine for peeling off exocarps of the coconut fruits as long as the natural shape of the coconut fruits is maintained and the outer skins are not weaken or the endocarps of the coconut fruits are not damaged. Most preferably the removal of the exocarp is completely performed by hands.

Next, washing and cleaning 3 eyes of the husked coconut fruits, until the openings of the husked coconut fruits are explored, but the openings of the husked coconut fruits are not broken.

Rapidly washing the husked coconut fruits by water, picking up them immediately, and then draining, and not impregnating with water for a long time.

### iii) Drying the surface of the husked coconut fruits

After removing the exocarps and washing, placing the husked coconut fruits on inox shelves in the room, and then using industrial fans for blowing from a plurality of directions of the drying shelves for drying until the of surface of endocarps of the husked coconut fruits is changed to peach brown.

Measuring moisture content on the surface of endocarps of the husked coconut fruits so that it does not exceed 5-10%.

### iv) Freezing the husked coconut fruits

After drying, the husked coconut fruits are transferred into a freezing room for freezing. The freezing room for freezing the husked coconut fruits is a type of room that can freeze the temperature to -18°C or less and has a system for adjusting temperature and time. The husked coconut fruits are transferred into the freezing room, neatly arranged on the shelves, and then the step of freezing is performed according to 7 following phases:
Freezing phase 1: reducing temperature of the husked coconut fruits to a temperature in a range from +5°C to 0°C and maintaining this temperature for 66-78 hours, preferably about 72 hours, i.e 3 days.
Freezing phase 2: further reducing temperature of the husked coconut fruits to a temperature in a range from 0°C to -5°C and maintaining this temperature for 66-78 hours, preferably about 72 hours, i.e 3 days.
Freezing phase 3: further reducing temperature of the husked coconut fruits to a temperature in a range from -5°C to -10°C and maintaining this temperature for 66-78 hours, preferably about 72 hours, i.e 3 days.
Freezing phase 4: further reducing temperature of the husked coconut fruits to a temperature in a range from -10°C to -12°C and maintaining this temperature for 30-42 hours, preferably about 36 hours, i.e 1.5 days.
Freezing phase 5: further reducing temperature of the husked coconut fruits to a temperature in a range from -12°C to -14°C and maintaining this temperature for 30-42 hours, preferably about 36 hours, i.e 1.5 days.
Freezing phase 6: further reducing temperature of the husked coconut fruits to a temperature in a range from -14°C to -16°C and maintaining this temperature for 30-42 hours, preferably about 36 hours, i.e 1.5 days.
Freezing phase 7: further reducing temperature of the husked coconut fruits to a temperature in a range from -16°C to -18°C and maintaining this temperature for 42-54 hours, preferably about 48 hours, i.e 2 days.

Therefore, total time for freezing the husked coconut fruits in a range from 330 hours to 414 hours, preferably about 372 hours, i.e 15.5 days.

### v) Packing the husked coconut fruits

After freezing, classifying the husked coconut fruits, which have the temperature in a range from -16°C to -18°C according to their size and weight, and then packing them into carton boxs. Next, wrapping the carton boxs by a shrink film by the system for cutting and gluing a shrink film, and then returning them into the freezing room in order to maintain their temperature at -18°C. This temperature will be maintained until use.

### Advantageous effects of invention

By the process for freezing kinds of fresh coconut fruits according to the present invention, the freshness and the deliciousness of the fresh coconut fruits are kept in the extended period of time up to 24 months, which are completely achieved by the freezing method, without use of any chemicals, therefore the process is very safe for users and environmental-friendly.

The freshness of the fresh coconut fruits frozen according to the process according to the present invention is kept, which is similar to that of freshly-harvested coconut fruits (the process according to the present invention is similar to the methods of preserving living cells). This process for freezing is to freeze the water molecules in the coconut fruits, the coconut meat, thereby the cell tissue structures are not disrupted, the oxidation is inhibited, the bacterial infection is prevented, thereby the taste and the color of these frozen coconut fruits are unchanged as well as the content of nutrients are maintained up to 99.7%.

Another advantage of the process for freezing kinds of fresh coconut fruits according to the present invention is that the sweetness of coconut juice and the coconut copra is increased and especially the taste of the fresh coconut fruits is more fragrant.

By the process according to the present invention, the coconut fruits may be stored for a long time, which facilitates the export of coconut fruits to other countries, brings the great economic benefits to the coconut growers and the coconut exporting and processing enterprises.

## Claims

1. A process for freezing kinds of fresh coconut fruits comprising the following steps:
i) Selecting coconut fruits
selecting coconut fruits from coconut trees of 15 years old or more, preferably the Siamese blue coconut trees harvesting coconut fruits of 33-35 day old to achieve the sweetness of 75°Brix or more;
ii) Cleaning the coconut fruits
cutting and removing exocarps of the coconut fruits, peeling off coirs of the coconut fruits until endocarps of the coconut fruits are explored,
washing and cleaning 3 eyes of the husked coconut fruits,
cleaning until the openings of the husked coconut fruits are explored, but the openings of the husked coconut fruits are not broken,
rapidly washing the husked coconut fruits by water, picking up them immediately, and then draining, and not impregnating with water for a long time;
iii) Drying the surface of the husked coconut fruits
placing the husked coconut fruits on inox shelves in the room, and then using industrial fans for drying from a plurality of directions of the drying shelves until the surface of endocarps of the husked coconut fruits is changed to peach brown,
measuring moisture content on the surface of endocarps of the husked coconut fruits so that it does not exceed 5-10%;
iv) Freezing the husked coconut fruits according to 7 following phases:
Freezing phase 1: reducing temperature of the husked coconut fruits to a temperature in a range from +5°C to 0°C and maintaining this temperature for 66-78 hours,
Freezing phase 2: further reducing temperature of the husked coconut fruits to a temperature in a range from 0°C to -5°C and maintaining this temperature for 66-78 hours,
Freezing phase 3: further reducing temperature of the husked coconut fruits to a temperature in a range from -5°C to -10°C and maintaining this temperature for 66-78 hours,
Freezing phase 4: further reducing temperature of the husked coconut fruits to a temperature in a range from -10°C to -12°C and maintaining this temperature for 30-42 hours,
Freezing phase 5: further reducing temperature of the husked coconut fruits to a temperature in a range from -12°C to -14°C and maintaining this temperature for 30-42 hours,
Freezing phase 6: further reducing temperature of the husked coconut fruits to a temperature in a range from -14°C to -16°C and maintaining this temperature for 30-42 hours, and
Freezing phase 7: further reducing temperature of the husked coconut fruits to a temperature in a range from -16°C to -18°C and maintaining this temperature for 42-54 hours; and
v) Packing the husked coconut fruits
classifying the husked coconut fruits according to their size and weight, and then packing them into carton boxs,
using a shrink film to wrap the carton boxs by the system for cutting and gluing a shrink film,
maintaining the husked coconut fruits in the carton boxs at a temperature about - 18°C until use.

2. The process for freezing kinds of fresh coconut fruits according to claim 1, wherein step iv) is performed as follows:
Freezing phase 1: reducing temperature of the husked coconut fruits to a temperature in a range from +5°C to 0°C and maintaining this temperature for 72 hours,
Freezing phase 2: further reducing temperature of the husked coconut fruits to a temperature in a range from 0°C to -5°C and maintaining this temperature for 72 hours,
Freezing phase 3: further reducing temperature of the husked coconut fruits to a temperature in a range from -5°C to -10°C and maintaining this temperature for 72 hours,
Freezing phase 4: further reducing temperature of the husked coconut fruits to a temperature in a range from -10°C to -12°C and maintaining this temperature for 36 hours,
Freezing phase 5: further reducing temperature of the husked coconut fruits to a temperature in a range from -12°C to -14°C and maintaining this temperature for 36 hours,
Freezing phase 6: further reducing temperature of the husked coconut fruits to a temperature in a range from -14°C to -16°C and maintaining this temperature for 36 hours, and
Freezing phase 7: further reducing temperature of the husked coconut fruits to a temperature in a range from -16°C to -18°C and maintaining this temperature for 48 hours.

## Patentansprüche

1. Verfahren zum Einfrieren von Arten frischer Kokosnussfrüchte, umfassend die folgenden Schritte:
i) Auswählen der Kokosnussfrüchte
Auswählen von Kokosnussfrüchten von mindestens 15 Jahre alten Kokospalmen, vorzugsweise von siamesischen blauen Kokospalmen, Ernten von 33-35 Tage alten Kokosnussfrüchten, um eine Süße von 75°Brix oder mehr zu erreichen;
ii) Reinigen der Kokosnussfrüchte
Schneiden und Entfernen von Exokarpen der Kokosnussfrüchte, Abschälen der Kokosfasern der Kokosnussfrüchte, bis Endokarpen der Kokosnussfrüchte erkundet sind,
Waschen und Reinigen von 3 Augen der geschälten Kokosnussfrüchte,
Reinigen, bis die Öffnungen der geschälten Kokosnussfrüchte erkundet sind, aber die Öffnungen der geschälten Kokosnussfrüchte nicht gebrochen sind,
schnelles Waschen der geschälten Kokosnussfrüchte mit Wasser, diese sofort aufnehmen und dann abtropfen lassen und nicht lange mit Wasser imprägnieren;
iii) Trocknen der Oberfläche der geschälten Kokosnussfrüchte
Platzieren der geschälten Kokosnussfrüchte auf Inox-Ablagen im Raum und anschließende Verwendung von Industrieventilatoren zum Trocknen aus mehreren Richtungen der Trocknungsablagen, bis die Oberfläche der Endokarpen der geschälten Kokosnussfrüchte pfirsichbraun ist,
Messen des Feuchtigkeitsgehalts auf der Oberfläche der Endokarps der geschälten Kokosnussfrüchte, sodass er 5-10 % nicht überschreitet;
iv) Einfrieren der geschälten Kokosnussfrüchte gemäß den 7 folgenden Phasen:
Einfrierphase 1: Reduzieren der Temperatur der geschälten Kokosnussfrüchte auf eine Temperatur in einem Bereich von +5 °C bis 0 °C und Aufrechterhalten dieser Temperatur über 66-78 Stunden,
Einfrierphase 2: weiteres Reduzieren der Temperatur der geschälten Kokosnussfrüchte auf eine Temperatur in einem Bereich von 0 °C bis -5 °C und Aufrechterhalten dieser Temperatur über 66-78 Stunden,
Einfrierphase 3: weiteres Reduzieren der Temperatur der geschälten Kokosnussfrüchte auf eine Temperatur in einem Bereich von -5 °C bis -10 °C und Aufrechterhalten dieser Temperatur über 66-78 Stunden,
Einfrierphase 4: weiteres Reduzieren der Temperatur der geschälten Kokosnussfrüchte auf eine Temperatur in einem Bereich von -10 °C bis -12 °C und Aufrechterhalten dieser Temperatur über 30-42 Stunden,
Einfrierphase 5: weiteres Reduzieren der Temperatur der geschälten Kokosnussfrüchte auf eine Temperatur in einem Bereich von -12 °C bis -14 °C und Aufrechterhalten dieser Temperatur über 30-42 Stunden,
Einfrierphase 6: weiteres Reduzieren der Temperatur der geschälten Kokosnussfrüchte auf eine Temperatur in einem Bereich von -14 °C bis -16 °C und Aufrechterhalten dieser Temperatur über 30-42 Stunden,
Einfrierphase 7: weiteres Reduzieren der Temperatur der geschälten Kokosnussfrüchte auf eine Temperatur in einem Bereich von -16 °C bis -18 °C und Aufrechterhalten dieser Temperatur über 42-54 Stunden,
v) Verpacken der geschälten Kokosnussfrüchte
Klassifizieren der geschälten Kokosnussfrüchte nach Größe und Gewicht und anschließendes Verpacken in Kartons,
Verwenden eines Schrumpffilms zum Umhüllen der Kartons durch das System zum Schneiden und Kleben eines Schrumpffilms,
Halten der geschälten Kokosnussfrüchte in den Kartons bis zur Verwendung auf einer Temperatur von etwa -18 °C.

2. Verfahren zum Einfrieren von Arten frischer Kokosnussfrüchte nach Anspruch 1, wobei Schritt iv) wie folgt ausgeführt wird
Einfrierphase 1: Reduzieren der Temperatur der geschälten Kokosnussfrüchte auf eine Temperatur in einem Bereich von +5 °C bis 0 °C und Aufrechterhalten dieser Temperatur über 72 Stunden,
Einfrierphase 2: weiteres Reduzieren der Temperatur der geschälten Kokosnussfrüchte auf eine Temperatur in einem Bereich von 0 °C bis -5 °C und Aufrechterhalten dieser Temperatur über 72 Stunden,
Einfrierphase 3: weiteres Reduzieren der Temperatur der geschälten Kokosnussfrüchte auf eine Temperatur in einem Bereich von -5 °C bis -10 °C und Aufrechterhalten dieser Temperatur über 72 Stunden,
Einfrierphase 4: weiteres Reduzieren der Temperatur der geschälten Kokosnussfrüchte auf eine Temperatur in einem Bereich von -10 °C bis -12 °C und Aufrechterhalten dieser Temperatur über 36 Stunden,
Einfrierphase 5: weiteres Reduzieren der Temperatur der geschälten Kokosnussfrüchte auf eine Temperatur in einem Bereich von -12 °C bis -14 °C und Aufrechterhalten dieser Temperatur über 36 Stunden,
Einfrierphase 6: weiteres Reduzieren der Temperatur der geschälten Kokosnussfrüchte auf eine Temperatur in einem Bereich von -14 °C bis -16 °C und Aufrechterhalten dieser Temperatur über 36 Stunden,
Einfrierphase 7: weiteres Reduzieren der Temperatur der geschälten Kokosnussfrüchte auf eine Temperatur in einem Bereich von -16 °C bis -18 °C und Aufrechterhalten dieser Temperatur über 48 Stunden,

## Revendications

1. Procédé de congélation de sortes de noix de coco fraîches comprenant les étapes suivantes :
i) Sélection de noix de coco
sélection de noix de coco à partir de cocotiers de 15 ans ou plus, de préférence les cocotiers bleu de Siam récoltant des noix de coco de 33 à 35 jours pour atteindre la teneur en sucre de 75°Brix ou plus ;
ii) Nettoyage des noix de coco
coupe et élimination des exocarpes des noix de coco, pelage des fibres des noix de coco jusqu'à ce que les endocarpes des noix de coco soient explorés,
lavage et nettoyage de 3 yeux des noix de coco décoquées,
nettoyage jusqu'à ce que les ouvertures des noix de coco décoquées soient explorées, mais les ouvertures des noix de coco décoquées ne sont pas cassées,
lavage rapide des noix de coco décoquées à l'eau, en les prélevant immédiatement, et ensuite rinçage, sans imprégnation avec de l'eau pendant une longue durée ;
iii) Séchage de la surface des noix de coco décoquées
placement des noix de coco décoquées sur des étagères en inox dans la pièce, et ensuite utilisation de ventilateurs industriels pour le séchage à partir d'une pluralité de directions des étagères de séchage jusqu'à ce que la surface des endocarpes des noix de coco décoquées passe à un marron pêche,
mesure de la teneur en humidité sur la surface des endocarpes des noix de coco décoquées de sorte qu'elle ne dépasse pas 5 à 10 % ;
iv) Congélation des noix de coco décoquées selon 7 phases suivantes :
Phase de congélation 1 : réduction de la température des noix de coco décoquées jusqu'à une température dans une plage de +5 °C à 0 °C et maintien de cette température pendant 66 à 78 heures,
Phase de congélation 2 : réduction supplémentaire de la température des noix de coco décoquées jusqu'à une température dans une plage de 0 °C à -5 °C et maintien de cette température pendant 66 à 78 heures,
Phase de congélation 3 : réduction supplémentaire de la température des noix de coco décoquées jusqu'à une température dans une plage de -5 °C à -10 °C et maintien de cette température pendant 66 à 78 heures,
Phase de congélation 4 : réduction supplémentaire de la température des noix de coco décoquées jusqu'à une température dans une plage de -10 °C à -12 °C et maintien de cette température pendant 30 à 42 heures,
Phase de congélation 5 : réduction supplémentaire de la température des noix de coco décoquées jusqu'à une température dans une plage de -12 °C à -14 °C et maintien de cette température pendant 30 à 42 heures,
Phase de congélation 6 : réduction supplémentaire de la température des noix de coco décoquées jusqu'à une température dans une plage de -14 °C à -16 °C et maintien de cette température pendant 30 à 42 heures, et
Phase de congélation 7 : réduction supplémentaire de la température des noix de coco décoquées jusqu'à une température dans une plage de -16 °C à -18 °C et maintien de cette température pendant 42 à 54 heures ; et
v) Emballage des noix de coco décoquées
classement des noix de coco décoquées selon leur taille et leur poids, et ensuite emballage des celles-ci dans des boîtes en carton,
utilisation d'un film rétractable pour envelopper les boîtes en carton par le système de coupe et de collage d'un film rétractable,
maintien des noix de coco décoquées dans les boîtes en carton à une température d'environ -18 °C jusqu'à utilisation.

2. Procédé de congélation de sortes de noix de coco fraîches selon la revendication 1, dans lequel l'étape iv) est effectuée comme suit :
Phase de congélation 1 : réduction de la température des noix de coco décoquées jusqu'à une température dans une plage de +5 °C à 0 °C et maintien de cette température pendant 72 heures,
Phase de congélation 2 : réduction supplémentaire de la température des noix de coco décoquées jusqu'à une température dans une plage de 0 °C à -5 °C et maintien de cette température pendant 72 heures,
Phase de congélation 3 : réduction supplémentaire de la température des noix de coco décoquées jusqu'à une température dans une plage de -5 °C à -10 °C et maintien de cette température pendant 72 heures,
Phase de congélation 4 : réduction supplémentaire de la température des noix de coco décoquées jusqu'à une température dans une plage de -10 °C à -12 °C et maintien de cette température pendant 36 heures,
Phase de congélation 5 : réduction supplémentaire de la température des noix de coco décoquées jusqu'à une température dans une plage de -12 °C à -14 °C et maintien de cette température pendant 36 heures,
Phase de congélation 6 : réduction supplémentaire de la température des noix de coco décoquées jusqu'à une température dans une plage de -14 °C à -16 °C et maintien de cette température pendant 36 heures, et
Phase de congélation 7 : réduction supplémentaire de la température des noix de coco décoquées jusqu'à une température dans une plage de -16 °C à -18 °C et maintien de cette température pendant 48 heures.
